# EUROPEAN PATENT SPECIFICATION

(11) **EP 4 107 376 B1**
(45) Date of publication and mention of the grant of the patent: **10.12.2025**
(21) Application number: 20815957.4
(22) Date of filing: 28.10.2020
(51) Int. Cl.: F01N 3/10, F01N 11/00, F01N 13/00, F02D 41/02, F02D 41/14

(54) **A COMBUSTION ENGINE AND A FAILURE DETECTION SYSTEM THEREOF**
VERBRENNUNGSMOTOR UND FEHLERERKENNUNGSSYSTEM DAFÜR
MOTEUR À COMBUSTION ET SYSTÈME ASSOCIÉ DE DÉTECTION DE DÉFAILLANCES

(30) Priority: 21.02.2020 IN 202041007412
(43) Date of publication of application: 28.12.2022
(60) Divisional application: 24175879.6
(73) Proprietor: TVS Motor Company Limited, 600006 Chennai (IN)
(72) Inventor: BALAJI, Vaidyanathan, Chennai, 600 006 (IN); BHARANIRAM, Senthilkumar, Chennai, 600 006 (IN); BOOBALAN, Mani, Chennai, 600 006 (IN); MANICKAM, Murugesan, Chennai, 600 006 (IN); SHUNMUGASUNDARAM, Palani, Chennai, 600 006 (IN)
(74) Representative: Patentanwaltskanzlei Matschnig & Forsthuber OG
(86) International application number: PCT/IN2020/050909
(87) International publication number: WO 2021/165982

(56) References cited:
- WO-A1-2019/015845
- US-A1- 2013 259 760
- US-A1- 2017 350 335

## Description

### TECHNICAL FIELD

The present subject matter, in general, relates to a combustion engine for a motor vehicle and, in particular relates to a failure detection system for the combustion engine.

### BACKGROUND

Generally, in motor vehicles with combustion engine, which is typically an internal combustion (IC) engine, power/torque is produced by combustion of air-fuel mixture provided through an intake system. The resultant gases of the combustion process are scavenged by an exhaust system that includes piping to guide gases from the combustion engine to a muffler. Also, the exhaust system is adapted to treat the gases before emitting into the atmosphere.

During the combustion of air-fuel mixture in the combustion engines of motor vehicles, in addition to water and carbon dioxide some other incomplete burnt gases like carbon monoxide (CO), hydro-carbons (HC) and nitrogen oxides (NOx) are also released. Generally, these gases are converted into harmless compounds by various popular mechanisms like use of treatment devices like catalytic converters. As the life of vehicles has been improving with time, to enhance durability & life of the engine, it is essential to monitor & maintain the functioning of the treatment device, which could make the system costlier. Additional challenge is to provide such systems in small vehicles like two wheelers or three wheelers cost effectively.

US 2017/0350335 A1 discloses an exhaust gas treatment of an internal combustion engine having a catalytic converter and exhaust gas sensors to detect exhaust gases from the engine. The catalytic converter is provided under the engine, and the exhaust gas sensors are provided within the engine front/rear direction so that the catalyst is provided between exhaust gas sensors of front/ rear end of the catalyst.

WO 2019/015845 A1 discloses an exhaust gas treatment of an internal combustion engine having a first lambda sensor being disposed near the cylinder head upstream of a catalytic converter and a second lambda sensor being disposed downstream of the converter, and the second lambda sensor is arranged in the exhaust system at a maximum of four times the diameter of exhaust gas cleaning system, and away from the exhaust gas cleaning system.

US 2013/0259760 A1 discloses an exhaust pipe having a straight portion to include a first sensor and a second sensor being disposed inside an outer covering which covers an outer surface of a catalytic converter.

### BRIEF DESCRIPTION OF THE DRAWINGS

The detailed description is described with reference an embodiment of a two wheeled vehicle to the accompanying figures. The same numbers are used throughout the drawings to reference like features and components.
Fig. 1 depicts a right-side view of an exemplary motor vehicle, in accordance with an embodiment of the present subject matter.
Fig. 2 depicts an enlarged right-side view of a power unit, in accordance with an embodiment of the present subject matter.
Fig. 3 depicts a schematic view of the exhaust system, in accordance with an embodiment of the present subject matter.
Fig. 4 depicts a schematic sectional view of a portion of the exhaust system taken orthogonal to an axis thereof, in accordance with an embodiment of the present subject matter.
Fig. 5 depicts a schematic view of a portion of the exhaust system and corresponding failure detection system, in accordance with an embodiment of the present subject matter.
Fig. 6 depicts a graphical representation of turbulence in the exhaust system after treatment device, in accordance with an embodiment of the present subject matter.
Fig. 7 depicts a flow chart for method of operation of the failure detection system, in accordance with an embodiment of the present subject matter.
Fig. 8 depicts a schematic view of an output of first sensor member drawn against time, in accordance with a fourth embodiment of the present subject matter.
Fig. 9 (a) - 9 (d) depicts schematic views of an output of second sensor member, in accordance with an embodiment of the present subject matter.

### DETAILED DESCRIPTION

Generally, in motor vehicles like two wheelers and three wheelers, the exhaust system may have two or more treatment devices that are disposed selectively in the exhaust system. For example, a first treatment device may be disposed in proximity to the exhaust port of the cylinder head and other treatment devices may be disposed subsequently downstream to the first treatment device. The treatment device can be a two-way treatment device or a three-way treatment device or a device with selective loading for treating the exhaust gases. Thus, the gas treatment device is a critical element of the exhaust system, which helps in treating the harmful components in the exhaust gas.

The treatment device includes a substrate that is loaded with precious metals such as platinum, palladium, rhodium or other similar metals. This makes the treatment device a 'precious element' of the exhaust system due to the cost premium involved. This substrate is active at activation temperature ranges, but is sensitive to any high temperatures that could potentially damage the substrate. Generally, a first sensor member like a lambda sensor is provided upstream of the treatment device and a second sensor member is provided downstream of the same treatment device. The first sensor member serves as means for gauging the oxygen content in the exhaust gases passing through the exhaust system thereby it can also be used to provide closed loop feedback to an air-fuel controlling unit like an electronic control unit. Further, the second sensor member also is used as a means for gauging the oxygen content of the gases reaching thereat, subsequent to treatment at the treatment device. Thus, the second sensor member also helps in assessing the functional condition of the treatment device thereby enabling detecting a failure of the treatment device.

For example, in some vehicles the treatment device is disposed in the vicinity of a muffler body or within the muffler body, which is away from any point exposed to be in contact, and also to be not affected by environmental factors. Also, a second treatment device may be disposed upstream of the aforementioned treatment device. In such conditions, plurality of elements is to be disposed in the vicinity of each treatment device, which makes the system costlier. Also, the exhaust system would be populated with these treatment devices and the sensor members. As the number of components increases, there is a rise in probability of malfunction of the system due to large number of elements, where failure of any one element would result in giving false data. Moreover, the sensor member may also provide erroneous data to the electronic control unit regarding a functioning condition of the treatment device depending on the position of the sensor member with reference to the treatment device. For example, if the system provides error information of condition of the treatment device, it may affect the user or affect the environment. For example, if the system gives false information regarding proper functioning of the treatment device when the treatment device is not working, it would turn out to be harmful to the environment. Or else, if the system gives false information that the treatment device has failed when the treatment device is functioning properly, it unnecessarily leads to a complete change in the exhaust system, which is expensive. Thus, the challenge is to provide a reliable system that is cost effective and at the same time capable of providing condition of the treatment device with minimum or no error.

Further, as per a known art, a treatment device may be disposed in a muffler. Provision of a sensor member in the muffler is complex as it is located substantially at a rear portion of the vehicle and also at a lower portion of the vehicle thereby making it prone to damage and failure. Moreover, electrical connection from a sensor disposed in the muffler body to the control unit is also complex due to distance, heat dissipating from muffler etc.

Thus, there is a need for an exhaust system for a vehicle that addresses the aforementioned and other short comings.

Hence, the present subject matter provides a combustion engine and a failure detection system thereof. The combustion engine for a small motor vehicle.

The combustion engine includes an exhaust system comprising plurality of treatment devices. The plurality of treatment devices comprising a first treatment device in proximity to an exhaust port of the combustion engine. The first treatment device is capable of quickly attaining light-off temperature.

In one embodiment, a first sensor member is disposed upstream of first treatment device on the cylinder head and a second sensor member is disposed downstream of the first treatment device at a low-turbulence zone, wherein the low-turbulence zone is within a distance of 10 times a diameter of the first treatment device. The second treatment device is disposed in a region of low-turbulence due to high velocity of exhaust gases exiting the first treatment device thereby providing minimal errors. Further, the need for providing sensor members for the subsequent treatment devices (treatment devices disposed subsequent to the first treatment device) is eliminated.

Thus, the present subject matter eliminates any such complex design requirements thereby making the system simple to be adapted in any motor vehicle like two wheelers or three wheelers having various structural configurations. Furthermore, the system requires only two sensor members to detect the failure of the entire exhaust system thereby making it a cost-effective system. Also, the need for provision of various mounting points on the exhaust system is eliminated thereby reducing the number of leak points on the exhaust system. As more the number of mounting points being provided on the exhaust system, the mounting points also may become leak points with time whereby the exhaust gases tend to leak through these mounting points which is not desired. The present subject matter addresses the aforementioned short coming.

In the embodiment, the first treatment device is a secondary treatment device having overall conversion capability less than an overall conversion capability of the second treatment device (acting as primary treatment device) whereby the first treatment device has smaller volume relative the second treatment device. Thus, the first treatment device can be accommodated in the discharge pipe or can be mounted to the cylinder without the need for enlarging the diameter of the discharge pipe or the cylinder head drastically. Thus, the system can also be easily adapted to the existing two-wheeler and three-wheeler configurations.

In one embodiment, a failure detection system is provided that includes a detection control unit being functionally connected to the first sensor member and the second sensor member to receive data threrefrom with respect to first treatment device thereby determining any failure of conversion capability of the exhaust system. The term 'conversion capability' refers to capability of the system to treat exhaust gases, say treatment of carbon monoxide, hydro-carbon emission, nitrogen oxide and other emissions. The exhaust system having the first treatment device in proximity to the exhaust port, in case of any eventual failure, leads to failure of the first treatment device as an early failure whereby the condition of the subsequent treatment devices is predicted by the failure detection system thereby triggering malfunction indication leading to exhaust system replacement. Thus, the failure of the first treatment device acts like an early warning system enabling intervention in terms of timely repair thereby avoiding high cost consequential failure of the exhaust system and / or the second treatment device.

According to the invention, the first sensor member is mounted on the cylinder head of the combustion engine.

The system of the present subject matter is capable of being adapted to various configurations of the motor vehicle as the system enables a designer to have freedom & flexibility of easily incorporating the solution on a vertical type engine, a forward inclined engine, or a horizontal engine, wherein the second sensor member is securely disposed in a selected circumferential region on the discharge pipe. The selected circumferential region is disposed away from any of a downward facing side or a laterally outward facing side of the exhaust system with reference to the vehicle thereby eliminating need for any additional clearance from the ground or nearby parts as well as avoiding potential damage from accidental stone hitting etc.

Arrows wherever provided in the top right corner in the drawings depicts direction with respect to the vehicle, wherein an arrow F denotes front direction, an arrow R indicates rear direction, an arrow UP denotes upward direction, an arrow Dw denotes downward direction, an arrow RH denotes right side, and an arrow LH denotes left side.

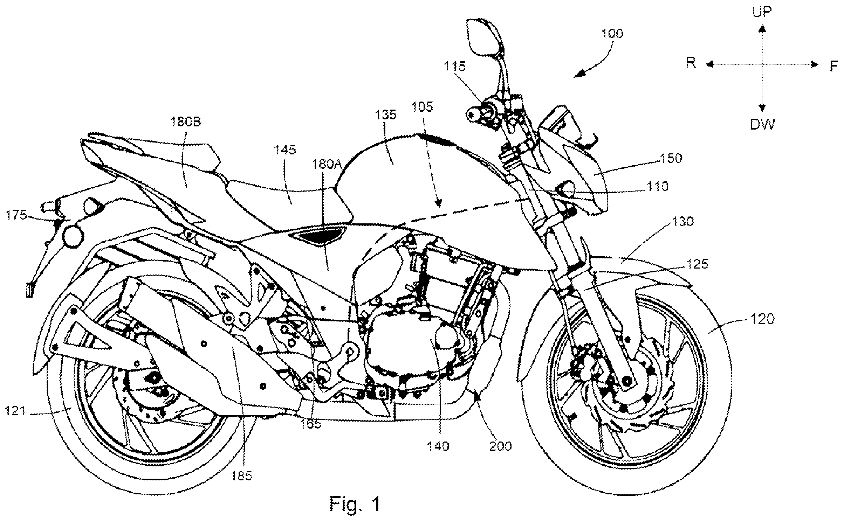

Fig. 1 illustrates a side view of an exemplary motor vehicle 100 in accordance with the present subject matter. The motor vehicle (referred to as 'vehicle' for brevity) 100 includes a body frame 105 to support different parts of the vehicle 100. The body frame 105 includes a head tube 110 at its front-end portion. The head tube 110 supports a steering shaft not shown rotatably in a certain range. In an upper portion of the steering shaft a handlebar 115 is connected. The handlebar 115 is used to steer the vehicle 100 and is connected to a front wheel 120 through the steering shaft that is in turn connected to a front fork assembly 125. At least an upper portion of the front wheel 120 is covered by a front fender 130, which prevents mud and water from getting deflected towards the steering shaft or rearward of the wheel 120.

In a front portion of the body frame 105 a fuel tank 135 is mounted and is disposed immediately behind the handlebar 115. In one embodiment, a power unit including an internal combustion IC engine 140 is mounted to the body frame 105. In the present embodiment, the power unit is fixedly mounted to the body frame 105. A seat 145 is placed behind the fuel tank 135. The seat 145 includes a front-rider portion and rear-pillion portion.

To provide visibility, a headlamp unit 150 is provided in the front portion of the vehicle 100. The headlamp unit 150, in the present embodiment is mounted to the front fork assembly 125. The front fork assembly 125, which forms the front suspension system, serves as damping component. Similarly, a rear suspension system 165, which is a hydraulic damped arrangement in one implementation, is connected to the body frame 105. The rear suspension system 165 comprises of at least one rear suspension preferably on either side of the vehicle 100. However, in another embodiment, the motor vehicle 100 may have only one rear suspension, either on the left side, on the right side, at a lateral centre, or at an offset from the lateral centre of said vehicle. Further, a swing arm not shown extending rearward is swingably connected to a lower rear portion of the body frame 105 and the swing arm is functionally connected to the rear suspension 165. A rear wheel 121 is rotatably supported at a rear end portion of the swing arm 170. Power/ torque generated by the power unit 140 is transmitted to the rear wheel 121 through a transmission system not shown which includes a chain drive, a belt drive, so as to drive and rotate the rear wheel 115. A rear fender 175 is provided for covering at least an upper side portion of the rear wheel 121 and prevents mud and water splashed by the rotating rear wheel 121 from reaching the muffler, the power unit 140 and other parts disposed close by.

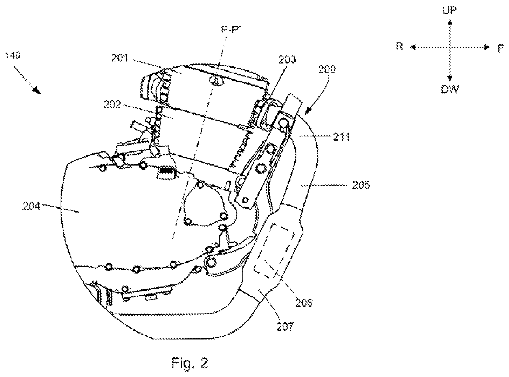

The power unit with the combustion engine 140 is equipped with an exhaust system 200 that includes a discharge pipe 205 (shown in Fig. 2) connected to the combustion engine 140. Further, a muffler 185 is connected to the discharge pipe 205. The muffler 185, in the depicted embodiment, is disposed along one lateral side of the vehicle and extends rearward substantially adjacent to the rear wheel 121. However, the muffler may be disposed under the power unit, or downward of the seat assembly or rearward of the power unit.

To enhance the overall aesthetics of the vehicle 100 and to prevent undesired foreign particles from entering parts of the vehicle, a plurality of panels 180A, 180B are attached to the body frame 105.

Fig. 2 illustrates an enlarged side perspective view of the power unit, in accordance with an embodiment of the present subject matter. In the present embodiment, the combustion engine 140 is disposed such that a piston axis P-P' is forwardly inclined, which means it is an acute angle with respect to an imaginary vertical line. Herein, the term power unit is not limited to the combustion engine and may include an additional electrical motor that is capable of assisting the combination engine or is capable of operating independent of the combustion engine. In another embodiment, the power unit may be a horizontal type, wherein the piston axis is substantially orthogonal to the imaginary vertical line. The combustion engine 140 includes a cylinder portion defined by a cylinder block 202. The cylinder block 202 is mounted to a crankcase 204 of the combustion engine 140. The crankcase 204 is connected to the body frame 105 of the vehicle 100. In one embodiment, the power unit is fixedly mounted to the body frame 105. In another embodiment, the power unit is swingably mounted to the body frame. However, in another embodiment, the power unit is fixedly mounted to a swinging member and the swinging member is swingably connected to the body frame.

Further, the cylinder block 202 supports a cylinder head 201 that includes a valve assembly not shown. The valve assembly enables entry of air-fuel mixture into the cylinder portion, where combustion of air-fuel mixture takes place. Subsequently, the valve assembly enables dissipation of the burnt gases from the cylinder portion. The air induction system along with air fuel supply system is connected to one side wall of the cylinder head 201 that is provided with an input port not shown. In the present embodiment, the input port is provided in a rear portion of the cylinder head 201. Further, an exhaust port 203 is provided on another side wall of the cylinder head 201, which is substantially on the opposite of the input port. In the present implementation, the exhaust port 203 is provided on a front facing side wall of the cylinder head 201 and the exhaust system 200 is connected to the exhaust port 203.

The exhaust system 200 includes a discharge pipe 205 that connects the cylinder head 201 to the muffler 185. An upstream end portion of the discharge pipe 205 is connected to the exhaust port 203 of the cylinder head 201. In the depicted embodiment, the discharge pipe 205 extends downward towards one lateral side RH/LH of the vehicle 100 and then extends rearward towards the muffler 185. The exhaust system 200 is provided with plurality treatment devices disposed in the exhaust system 200. In the depicted embodiment, the discharge pipe 205 includes a first receiving portion 207 that is capable of accommodating a first treatment device 206 disposed in proximity to an exhaust port 203 of the combustion engine 140. The first treatment device 206 is disposed at a pre-determined distance from an exhaust port end portion of the exhaust port 203 to achieve activation temperature for the light-off of the first treatment device 206 quickly. Further, the exhaust system 200 may include a primary receiving portion, capable of receiving a second treatment device.

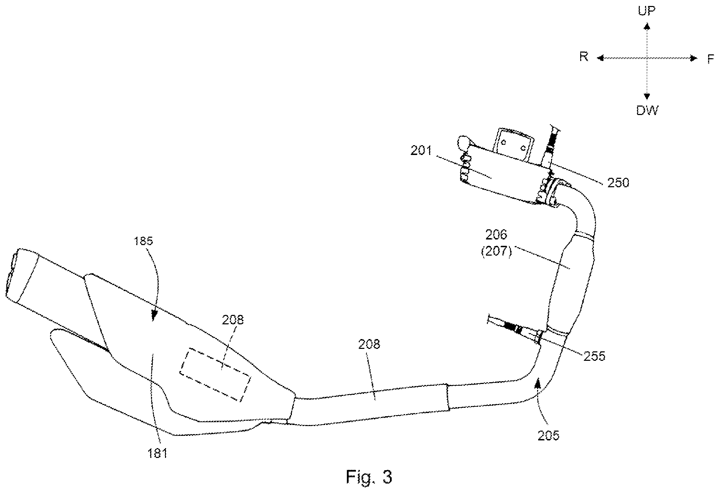

Fig. 3 depicts a perspective view of the exhaust system, in accordance with an embodiment of the present subject matter. In the depicted embodiment, a second treatment device 208 is disposed at a downstream portion of first treatment device. Thus, when considering the exhaust gas flow path, the first treatment device 206 is at an upstream with respect to the second treatment device 208. In one implementation, the second treatment device 208 can be disposed substantially after a mid-portion of the discharge pipe 205.

A first sensor member 250 is disposed upstream of the first treatment device 206 and a second sensor member 255 is disposed downstream of the first treatment device 206. In the depicted embodiment, the first sensor member 250 is disposed on the cylinder head 201. In one embodiment, the first treatment device 206 acts as a secondary treatment device having a volume substantially lesser than a volume of the second treatment device 208, which acts as a primary treatment device. Say, in one embodiment, a coating volume of the second treatment device is about 120% to 500% of the coating volume of the first treatment device 206. In other words, the first treatment device 206 is having an overall conversion efficiency lesser than the overall conversion efficiency of the second treatment device 208. Such first treatment device 206 is compactly accommodated within the discharge pipe 205 without the need for increasing the diameter of the discharge pipe 205 with minimal back pressure being created by the first treatment device 206. The second treatment device 208, which may be larger in volume compared to the first treatment device 206, is accommodated in a muffler body 181 of the muffler 185.

However, in a non claimed example, the second treatment device may be disposed upstream of the first treatment device, say in the exhaust pipe, wherein the second treatment device acts as a primary treatment device having an overall conversion efficiency greater than the first treatment device.

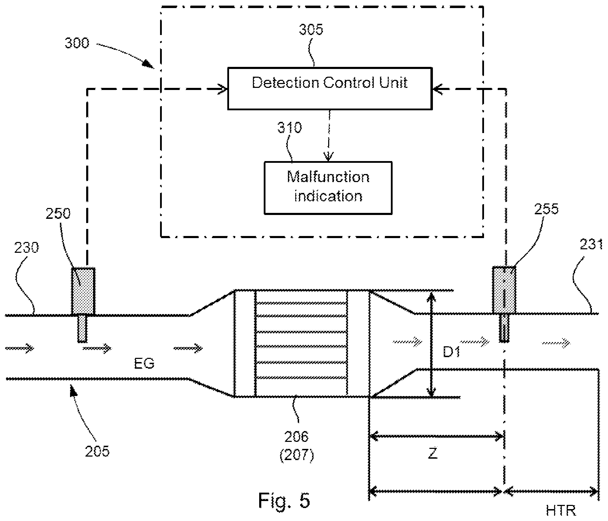

Further, the detection control unit 305 (shown in Fig. 5) is functionally connected to the first sensor member 250 and to the second sensor member 255 to receive data related to gases passing therethrough. The second sensor member 255 is disposed in low-turbulence zone Z, wherein the low-turbulence zone Z is at a distance less than or equal to 10 times a maximum cross-sectional dimension D1 (shown in Fig. 5) of the first treatment device 206 along the path of flow of the exhaust gases. For example, in one embodiment, the maximum cross-sectional dimension is a diameter of the first treatment device having a circular cross-section. The second sensor member 255 is disposed to provide minimum or no error data with regard to the exhaust gasses exiting the secondary treatment device. The second sensor member 255 is disposed at a portion where the turbulence of the exhaust gases is low due to high velocity of flow caused by nozzle effect of the first treatment device 206. Thus, the second sensor member 255 disposed in the low-turbulence zone Z provides accurate data due to information being provided to the detection control unit 305 is with low distortion thereby giving a reliable system solution.

Further, in one embodiment, a deterioration of a second treatment device 208 is estimated by the detection control unit 305 depending on the data retrieved from the sensors 250, 255 related to the first treatment device thereby eliminating the need for provision of an additional sensor member subsequent to the second treatment device 208. As the failure of the first treatment device occurs earlier than the second treatment device, the detection of failure of the first treatment device is focused on.

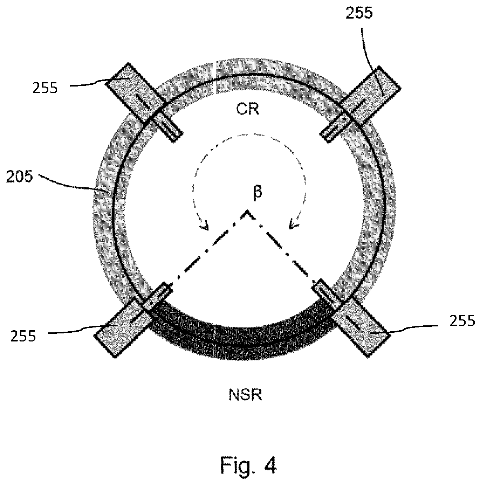

Fig. 4 depicts sectional view of the discharge pipe taken orthogonal to axis of the discharge pipe, at the second sensor member, in accordance with an embodiment of the present claimed subject matter. The second sensor member 255 is disposed on the circumference of the discharge pipe 205, wherein the second sensor member 255 is disposed within a circumferential region CR defined about a first angle β that is about 270 degrees of the circumference of the discharge pipe 205. In other words, the first sensor member 250 is disposed within an angle of 135 degrees of an imaginary line drawn either vertically or at an inward facing side of the discharge pipe 205 of the exhaust system 200.

The sensor member 255 is restricted from being disposed about a region away from the selected circumferential region CR referred to as no-sensor-region NSR. The no-sensor region NSR is provided such that it faces a downward side or an outward of the vehicle 100 whereby the sensor member is disposed away from the downward side (avoiding a hitting by stones or humps) and from the outward side (avoiding hitting from any obstacles in sideward direction). The no-sensor region NSR of the exhaust system 200 helps in disposing the sensor member 255 safely thereon, say on the discharge pipe 205, irrespective of the orientation of the discharge pipe 205 whereby the sensor member 255 can be kept functional protecting it from any physical damage due to any forceful or quick contact with foreign objects or particles like bumps, stones etc.

Fig. 5 depicts a schematic view of the exhaust system, in accordance with an embodiment of the present subject matter. The discharge pipe 205 accommodates a first treatment device 206 at a first receiving portion 207, wherein the first receiving portion 207 has an upstream portion 230 and a downstream portion 231. The exhaust gases EG reach the upstream portion 230 from the cylinder head 201 and reach the first treatment device 206 at which the treatment of exhaust gases takes place and then the gases reach the downstream portion 231. The first treatment device 206 is having a maximum cross-sectional dimension D1major cross-sectional dimension D1, which, in one embodiment, is greater than a diameter of the discharge pipe 205. A first sensor member 250 is disposed at an upstream portion 230 and a second sensor member 255 is disposed at a downstream portion 231, wherein the second sensor member 255 is disposed within the low-turbulence zone Z from the sensor member 255, which is within 10 times the maximum cross-sectional dimension D1 of the treatment device 206. Thus, the sensor member 255 is disposed away from a high turbulence region HTR, which is beyond 10 times of maximum cross-sectional dimension D1 of the treatment device 255 downstream of the treatment device 255. Thus, the detection control unit 305 receives error free data from the first sensor member 250 and the second sensor member 255, which are electrically connected to thereto. The detection control unit 305 analyzes the data based a pre-determined value or a tabular value and thereby determines the working condition of the treatment device 206. In case of failure of the treatment device 206, the detection control unit 305 triggers a malfunction indication system 310, which can be visual indication, audio indication, or the like.

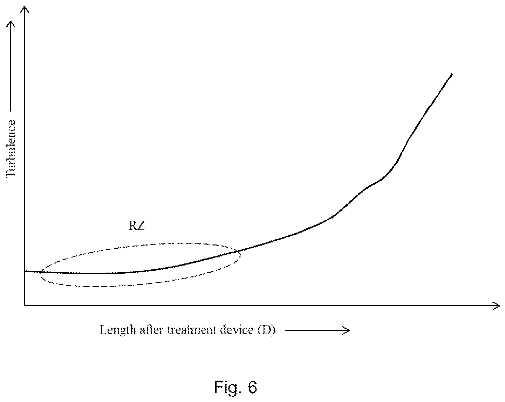

Fig. 6 depicts a graphical representation of turbulence in the exhaust system after the first treatment device, in accordance with an embodiment of the present claimed subject matter. The graph portrays the variation in turbulence in the exhaust system after the first treatment device. As can be seen, at the region RZ of turbulence curve, the turbulence of the exhaust gases EG is lower due to the nozzle effect, of the gases leaving the first treatment device, the exhaust gases travel with high velocity creating minimal distortion in the second sensor data. For example, the exhaust gases EG pass through various pores like passages provided therein thereby causing the nozzle effect while exiting therefrom. Thus, the gases retain high velocity till the end of the region RZ, which is analogous to the low-turbulence zone Z. However, subsequent to the region RZ, which is analogous to the high turbulence region HTR in the discharge pipe, the exhaust gases EG tend to provide erroneous data to reduction in velocity or due to creation of turbulence thereby providing inaccurate data to the detection control unit 305. The sensor disposed in the low-turbulence region Z is capable of providing reliable data with minimum fluctuation. Thus, the exhaust system 200 and the corresponding failure detection system 300 of the present subject matter is capable of functioning as a reliable & robust system as the functioning status is based on accurate data.

Subsequently, based on this data, the system 300 would be able to diagnose and/or estimate any failure of the second treatment device 208, which is disposed downstream of the first treatment device 206. As the failure of the first treatment device 206, which is disposed substantially in proximity to the exhaust port, occurs first due to exposure to high temperatures from the combustion engine, the system would be capable of detecting the early failure of the exhaust system 200 which might need a replacement or maintenance.

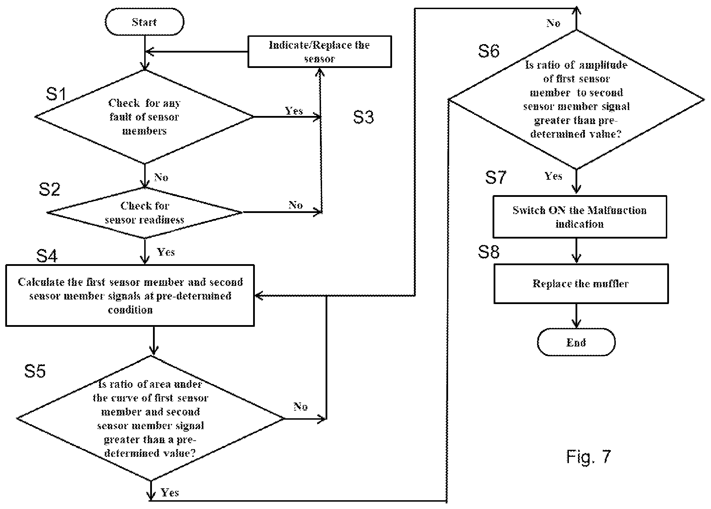

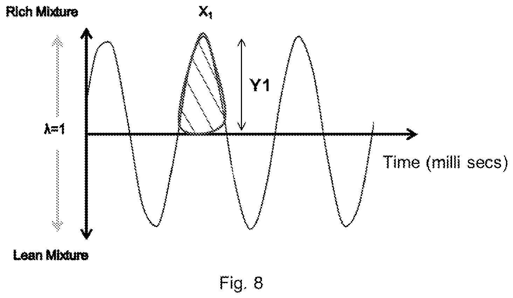

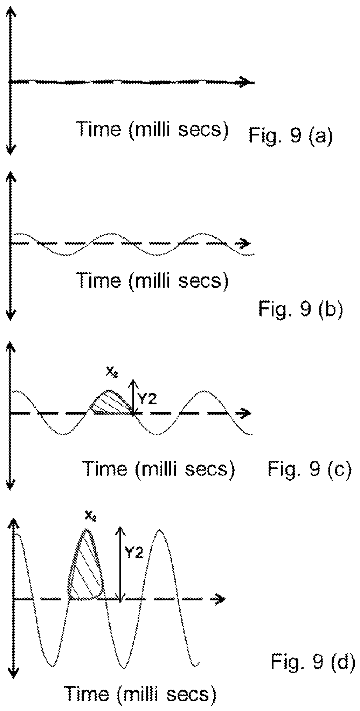

Fig. 7 depicts a method of failure detection of the exhaust system by failure detection system 300, in accordance with an embodiment of the present subject matter. At step S1, the failure detection system 300 (referred to as 'system') checks for any fault in the sensor members 250, 255 by reading the signals and comparing with a pre-determined value(s). Then, the system 300 checks for sensor readiness at step S2. If at steps S1 or S2 if the sensors are found to be faulty, the system 300 would indicate a sensor replacement at step S3. If the sensors are found to be functional at S2, at step S4, the system 300 calculates an output of the first sensor member 250 and the second sensor member 255 at pre-determined condition. The pre-determined condition can be a pre-determined engine speed, a pre-determined throttle position, a pre-determined temperature etc. to obtain a valid signal from the sensor members 250, 255. At step S5, the system 300 calculates a first ratio of an area under a curve X1 with an area under another curve X2 (explained through Fig. 8 and Fig. 9 (a) to 9 (d)) and compares with a first pre-determined/ pre-set value. If the first ratio (X1 to X2) is greater than the pre-determined value then the system 300 moves to subsequent check. At step S6, the system 300 checks if a second ratio of amplitude of the curve Y1 and amplitude of the curve Y2 is greater than a second pre-determined/ pre-set value. If the second ratio (Y1 to Y2) is greater than the second pre-determined value, then the system identifies it to be a malfunction of the treatment device 250/256 and at step S7, the system 300 indicates a malfunction of the exhaust system (especially the conversion system). At the step S8, the system 300 may indicate a replacement of the exhaust system, which can be provided at service or maintenance end. The aforementioned method of the present subject matter reduces any faulty detection of condition of the exhaust system as the system can be adapted to consider both the first ratio and the second ratio to decide on condition of the exhaust system.

Fig. 8 depicts output of a first sensor member drawn against time, in accordance with an embodiment of the present subject matter. The amplitude of the signal is analogous to the mixture, say if the mixture is rich then the amplitude is higher (positive) and if the mixture is lean then the amplitude is lower (negative). Prior to treatment of the exhaust gases, say before the treatment device 206, the output, which is at the first sensor member 250, which is pulsating signal. The signal has an area X1 and amplitude Y1.

Further, figures Fig. 9 (a) through Fig. 9(d) depict the output of the second sensor member 255 at various conditions. In Fig. 8 (a), the system depicts the output of the second sensor member 255, when the treatment device 206 is fully functional. Fig. 8 (d) depicts the output of the second sensor member 255, when the treatment device 206 has failed. As can be seen, with deterioration of the treatment device 206, the signal exhibits increasing amplitude Y2 and area X2. Further, the system is adapted to check the area and also amplitude to avoid any miscalculation thereby making it a robust system for failure detection.

### List of reference signs:

- 100: vehicle
- 105: body frame
- 110: head tube
- 115: handlebar
- 120: front wheel
- 121: rear wheel
- 125: front fork assembly
- 135: fuel tank
- 140: combustion engine
- 145: seat
- 150: headlamp unit
- 165: rear suspension
- 180: muffler
- 181: muffler body
- 200: exhaust system
- 201: cylinder head
- 202: cylinder block
- 203: exhaust port
- 204: crankcase
- 205: discharge pipe
- 206: first treatment device
- 207: first receiving portion
- 208: second treatment device
- 211: first bend
- 230: upstream portion
- 231: downstream portion
- 250: first sensor member
- 255: second sensor member
- 300: failure detection system
- 305: detection control unit
- 310: malfunction indication
- CR: circumferential region
- D1: diameter
- EG: exhaust gas
- F-R: longitudinal direction
- RH/LH: lateral side
- X1/X2: area
- Y1/Y2: amplitude
- Z: low-turbulence zone
- HTR: high turbulence region
- β: first angle

## Claims

1. A combustion engine (140) for a motor vehicle (100), said combustion engine (140) comprising:
an exhaust port (203);
an exhaust system (200), said exhaust system (200) comprising:
a first sensor member (250) and a second sensor member (255), wherein said first sensor member (250) is mounted on a cylinder head (201) of said combustion engine;
a plurality of treatment devices (206, 208), said plurality of treatment devices (206, 208) comprising a first treatment device (206) and a second treatment device (208), wherein said first treatment device (206) is a secondary treatment device and said second treatment device (208) is a primary treatment device, said second treatment device (208) having an overall conversion capability greater than said first treatment device (206);
wherein said first treatment device (206) is disposed upstream of said second treatment device (208) and in proximity to said exhaust port (203),
said first treatment device (206) including a maximum cross-sectional dimension (D1) ; and
wherein said second sensor member (255) is disposed downstream of said first treatment device (206) in a low-turbulence zone (Z), said low-turbulence zone (Z) being at a distance of less than or equal to 10 times said maximum cross-sectional dimension (D1) of said first treatment device (206) wherein said first treatment device (206) is disposed in a discharge pipe (205) of said exhaust system (200), and
wherein said second sensor member (255) is disposed at a selected circumferential region (CR) of a circumferential surface of said discharge pipe (205),
wherein said circumferential region (CR) is defined by a first angle (β), which is disposed away from a no-sensor-region (NSR),
wherein said no-sensor-region (NSR) is configured to face at least one of a downward side and a partially laterally outward side of said motor vehicle (100).

2. The combustion engine (140) as claimed in claim 1, wherein said second sensor member (255) is functionally connected to a detection control unit (305), said detection control unit (305) being configured to receive data from said second sensor member (255), and said detection control unit (305) being configured to detect failure of a conversion capability of said exhaust system (200).

3. The combustion engine (140) as claimed in claim 2, wherein said second treatment device (208) is disposed downstream of said first treatment device (206), and said detection control unit (305) is capable of detecting a failure of any of said first treatment device (206) and said second treatment device (208) using said second sensor member (255).

4. The combustion engine (140) as claimed in claim 2, said first sensor member (250) being disposed upstream of said first treatment device (206), and said detection control unit (305) being functionally connected to said first sensor member (250), and said detection control unit (305) being capable of comparing data from said first sensor member (250) and said second sensor member (255).

## Patentansprüche

1. Verbrennungsmotor (140) für ein Kraftfahrzeug (100), wobei der Verbrennungsmotor (140) aufweist:
eine Auslassöffnung (203);
ein Abgassystem (200), welches Abgassystem (200) aufweist:
ein erstes Sensorelement (250) und ein zweites Sensorelement (255), wobei das erste Sensorelement (250) an einem Zylinderkopf (201) des Verbrennungsmotors angebracht ist;
eine Vielzahl von Behandlungsvorrichtungen (206, 208), wobei die Vielzahl von Behandlungsvorrichtungen (206, 208) eine erste Behandlungsvorrichtung (206) und eine zweite Behandlungsvorrichtung (208) umfasst, wobei die erste Behandlungsvorrichtung (206) eine sekundäre Behandlungsvorrichtung ist und die zweite Behandlungsvorrichtung (208) eine primäre Behandlungsvorrichtung ist, wobei die zweite Behandlungsvorrichtung (208) ein insgesamt größeres Konversionsvermögen als die erste Behandlungsvorrichtung (206) hat;
wobei die erste Behandlungsvorrichtung (206) stromaufwärts der zweiten Behandlungsvorrichtung (208) und nächst der Auslassöffnung (203) angeordnet ist,
die erste Behandlungsvorrichtung (206) eine maximale Querschnittsdimension (D1) aufweist; und
wobei das zweite Sensorelement (255) stromabwärts der ersten Behandlungsvorrichtung (206) in einer Zone geringer Turbulenz (Z) angeordnet ist, wobei die Zone geringer Turbulenz (Z) in einem Abstand von weniger als oder gleich dem Zehnfachen der maximalen Querschnittsdimension (D1) der ersten Behandlungsvorrichtung (206) liegt, wobei die erste Behandlungsvorrichtung (206) in einer Auslassleitung (205) des Abgassystems (200) angeordnet ist, und
wobei das zweite Sensorelement (255) an einem ausgewählten Umfangsbereich (CR) einer Umfangsfläche der Auslassleitung (205) angeordnet ist,
wobei der Umfangsbereich (CR) durch einen ersten Winkel (β) definiert ist, der von einem sensorfreien Bereich (NSR) entfernt angeordnet ist,
wobei der sensorfreie Bereich (NSR) so konfiguriert ist, dass er einer nach unten gerichteten Seite und/oder einer teilweise seitlich nach außen gerichteten Seite des Kraftfahrzeugs (100) zugewandt ist.

2. Verbrennungsmotor (140) nach Anspruch 1, wobei das zweite Sensorelement (255) mit einer Detektionssteuereinheit (305) funktionsmäßig verbunden ist, wobei die Detektionssteuereinheit (305) dazu eingerichtet ist, Daten von dem zweiten Sensorelement (255) zu empfangen, und die Detektionssteuereinheit (305) dazu eingerichtet ist, einen Ausfall eines Konversionsvermögens des Abgassystems (200) zu erkennen.

3. Verbrennungsmotor (140) nach Anspruch 2, wobei die zweite Behandlungsvorrichtung (208) stromabwärts der ersten Behandlungsvorrichtung (206) angeordnet ist und die Detektionssteuereinheit (305) fähig ist, einen Ausfall der ersten Behandlungsvorrichtung (206) oder der zweiten Behandlungsvorrichtung (208) mithilfe des zweiten Sensorelements (255) zu erkennen.

4. Verbrennungsmotor (140) nach Anspruch 2, wobei das erste Sensorelement (250) stromaufwärts der ersten Behandlungseinrichtung (206) angeordnet ist und die Detektionssteuereinheit (305) mit dem ersten Sensorelement (250) funktionsmäßig verbunden ist und die Detektionssteuereinheit (305) fähig ist, Daten von dem ersten Sensorelement (250) und dem zweiten Sensorelement (255) zu vergleichen.

## Revendications

1. Moteur à combustion interne (140) pour un véhicule à moteur (100), ledit moteur à combustion interne (140) comprenant :
un orifice d'échappement (203) ;
un système d'échappement (200), ledit système d'échappement (200) comportant :
un premier élément capteur (250) et un deuxième élément capteur (255), ledit premier élément capteur (250) étant monté sur une culasse (201) dudit moteur à combustion interne ;
une pluralité de dispositifs de traitement (206, 208), ladite pluralité de dispositifs de traitement (206, 208) incluant un premier dispositif de traitement (206) et un deuxième dispositif de traitement (208), dont ledit premier dispositif de traitement (206) est un dispositif de traitement secondaire et ledit deuxième dispositif de traitement (208) est un dispositif de traitement primaire, ledit deuxième dispositif de traitement (208) ayant une capacité de conversion globale supérieure à celle dudit premier dispositif de traitement (206) ;
ledit premier dispositif de traitement (206) étant disposé en amont dudit deuxième dispositif de traitement (208) et à proximité dudit orifice d'échappement (203),
ledit premier dispositif de traitement (206) incluant une dimension transversale maximale (D1) ; et
ledit deuxième élément capteur (255) étant disposé en aval dudit premier dispositif de traitement (206) dans une zone à faible turbulence (Z), ladite zone à faible turbulence (Z) étant à une distance inférieure ou égale à 10 fois ladite dimension transversale maximale (D1) dudit premier dispositif de traitement (206), ledit premier dispositif de traitement (206) étant disposé dans un tuyau d'évacuation (205) dudit système d'échappement (200), et
ledit deuxième élément capteur (255) étant disposé au niveau d'une région circonférentielle sélectionnée (CR) d'une surface circonférentielle dudit tuyau d'évacuation (205),
ladite région circonférentielle (CR) étant définie par un premier angle (β), qui est disposé à distance d'une région sans capteur (NSR),
ladite région sans capteur (NSR) étant configurée orientée vers au moins l'un d'un côté vers le bas et un côté partiellement vers l'extérieur latéralement dudit véhicule à moteur (100).

2. Moteur à combustion (140) selon la revendication 1, dans lequel ledit deuxième élément capteur (255) est connecté de manière fonctionnelle à une unité de commande de détection (305), ladite unité de commande de détection (305) étant configurée pour recevoir des données provenant dudit deuxième élément capteur (255), et ladite unité de commande de détection (305) étant configurée pour détecter une défaillance de la capacité de conversion dudit système d'échappement (200).

3. Moteur à combustion (140) selon la revendication 2, dans lequel ledit deuxième dispositif de traitement (208) est disposé en aval dudit premier dispositif de traitement (206), et ladite unité de commande de détection (305) est capable de détecter une défaillance dudit premier dispositif de traitement (206) et dudit deuxième dispositif de traitement (208) à l'aide dudit deuxième élément capteur (255).

4. Moteur à combustion (140) selon la revendication 2, ledit premier élément capteur (250) étant disposé en amont dudit premier dispositif de traitement (206), et ladite unité de commande de détection (305) étant connectée de manière fonctionnelle audit premier élément capteur (250), et ladite unité de commande de détection (305) étant capable de comparer les données provenant dudit premier élément capteur (250) et dudit deuxième élément capteur (255).
